# EUROPÄISCHE PATENTANMELDUNG

(11) **EP 4 083 459 A1**
(43) Veröffentlichungstag der Anmeldung: **02.11.2022**
(21) Anmeldenummer: 21170462.2
(22) Anmeldetag: 26.04.2021
(51) Int. Cl.: F16D 3/68

(54) **WELLENKUPPLUNG**

(71) Anmelder: Siemens Aktiengesellschaft, 80333 München (DE)
(72) Erfinder: Bormann, Ulf, 90518 Altdorf (DE); Nolting, Christoph, 91315 Höchstadt/Aisch (DE); Scheibner, Dirk, 90473 Nürnberg (DE); Schimmer, Jürgen, 90473 Nürnberg (DE); Zettner, Jürgen, 90587 Veitsbronn (DE)

(57) **Zusammenfassung**

Die Erfindung betrifft eine Wellenkupplung (5) zur Kupplung einer ersten Welle (3) und einer zweiten Welle (4), aufweisend: eine erste Kupplungsnabe (55) zur Verbindung mit der ersten Welle (3) mit wenigstens einer Mitnahmeklaue (53), eine zweite Kupplungsnabe (54) zur Verbindung mit der zweiten Welle (4) mit wenigstens einer Mitnahmeklaue (51), einen Zahnkranz (40), ein Element (52) zur Signalisierung einer Fehlausrichtung der ersten Welle zur zweiten Welle, aufweisend ein mechanolumineszentes Material. Die Erfindung betrifft ferner ein System (100) sowie ein Verfahren.

## Beschreibung

In industriellen Anlagen ist eine präzise Ausrichtung eines antreibenden Motors zur Last besonders wichtig, da bei Ausrichtfehlern Belastungen auf Lagerstellen und Wellenkupplung wirken, die zu frühzeitigem Verschleiß und Ausfällen führen.

Die Wellenkupplung dient einer Verbindung von Motor zur Last. Ausrichtfehler im Antriebsstrang haben dynamische Kräfte zur Folge. Solche Fehler sind als Kraftwirkung auf die Wellenkupplung zu erkennen.

Im Betrieb ist daher eine periodische Kontrolle der Ausrichtung von Vorteil. Dies gelingt beispielsweise mit Haarlineal und Fühlerlehre.

Jedoch ist dies mit einer Abschaltung des Systems und einem hohen Arbeitsaufwand verbunden.

Der Erfindung liegt die Aufgabe zugrunde, Ausrichtfehler sicher und ohne Aufwand zu erkennen.

Die Lösung der Aufgabe gelingt durch Anspruch 1, d.h. eine Wellenkupplung zur Kupplung einer ersten Welle und einer zweiten Welle, aufweisend:
- eine erste Kupplungsnabe zur Verbindung mit der ersten Welle mit wenigstens einer ersten Mitnahmeklaue,
- eine zweite Kupplungsnabe zur Verbindung mit der zweiten Welle mit wenigstens einer zweiten Mitnahmeklaue,
- einen Zahnkranz,
- ein Element zur Signalisierung einer Fehlausrichtung der ersten Welle zur zweiten Welle, aufweisend ein mechanolumineszentes Material.

Eine Fehlausrichtung zweier Wellen zueinander führt vorteilhaft zu einem Druck auf das Element.

Die Wellen rotieren vorteilhaft bei einer Fehlausrichtung nicht mehr gleichmäßig, sondern ungleichmäßig, es kann auch zu einem Schlingern der Kupplung kommen. Durch die ungleichmäßige Rotation wird das Element durchgewalkt bzw. immer wieder gequetscht bzw. geknetet.

Das Element zur Signalisierung der Fehlausrichtung der ersten Welle zur zweiten Welle weist ein mechanolumineszentes Material auf. Dies ist ein Material das druckempfindlich und lichtimitierend ausgebildet ist.

Nach einer Ausübung von Druck auf das Element emittiert dieses für eine gewisse Zeit Licht.

Dies ist beispielsweise eine Lichtemission, die einige ms andauert, z. B. zwischen 1 ms und 100 ms.

Vorteilhaft emittiert das Element Licht, jedoch ist auch jede andere Art von Strahlung möglich.

Vorteilhaft ist eine Ausführungsform, wonach die Wellenkupplung als Elastomerkupplung ausgebildet ist. Dies hat den Vorteil, dass eine große Elastizität gegeben ist. Dies wird vorteilhaft durch elastische Elemente im Inneren der Kupplung gewährleistet. Eine Elastomerkupplung wirkt sich positiv auf eine Schwingungsdämpfung aus.

Vorteilhaft ist zudem eine Ausführungsform, wonach das Element an einem bei Fehlausrichtung der ersten Welle zur zweiten Welle mechanisch belasteten Bereich angeordnet ist. Hierzu kann das Element an und/oder innerhalb und/oder auf den Zahnkranz der Wellenkupplung ausgebildet sein.

Vorteilhaft ist hierbei eine Anordnung an einer Zahnflanke. Dies ist in der Figurenbeschreibung näher erläutert.

Eine Anordnung des Elements am Zahnkranz ist besonders platzsparend. So kann die Wellenkupplung kompakt gefertigt werden. Besonders vorteilhaft ist eine Ausführungsform, wonach das Element wenigstens teilweise an einer Oberfläche der Zahnflanke ausgebildet ist.

So kann bei einer ungleichmäßigen Rotation der Wellenkupplung das Element, beispielsweise durch eine Mitnahmeklaue, immer wieder gedrückt werden, wodurch immer wieder eine Lichtemission bewirkt wird.

Vorteilhaft ist zudem eine Ausführungsform, wonach das Element Kunststoff aufweist.

Beispielsweise ist das Element in eine Kunststofffolie eingebettet.

Das Element kann auch eine äußere Kunststoffhülle aufweisen, wobei im Inneren der Kunststoffhülle das mechanolumineszente Material angeordnet ist.

Als Kunststoff eignen sich besonders gut Polytetrafluorethylen (PTFE) und/oder Polydimethylsiloxan (PDMS).

In einer vorteilhaften Ausführungsform weist das Element kupferdotiertes Zinksulfid (ZnS:Cu) auf.

Vorteilhaft ist eine Ausführungsform, wonach das Element ZnS:Cu + PTFE aufweist. Alternativ ist auch eine Ausführungsform von Vorteil, wonach das Element ZnS:Cu + PDMS aufweist. Auch eine kombinierte Ausführungsform, wonach das Element ZnS:Cu + PDMS + PTFE aufweist, ist möglich.

Vorteilhaft ist eine Ausführungsform, wonach mechanoluminszente Partikel eigebettet sind. Eine Einbettung in Kunststoff (insbesondere in wenigstens einen der oben erläuterten Kunststoffe) ist von Vorteil.

So gelingt eine gute Kraftübertragung und damit eine Anregung zum Leuchten, also zur Lichtemission.

Die genannten Materialien bzw. die genannte Materialkombination sind nur ein Beispiel. Es gibt ein breites Spektrum an mechanolumineszenten Materialien, die geeignet sind. Die hier genannte konkrete Ausführung stellt keine Einschränkung dar, sondern dient lediglich einer Veranschaulichung der Erfindung.

Die Lösung der oben gestellten Aufgabe gelingt ferner durch Anspruch 12, d.h. ein System aufweisend:
- eine dynamoelektrische Maschine,
- eine Last,
- eine erste Welle,
- eine zweite Welle,
- eine Wellenkupplung zur Kupplung der ersten Welle und der zweiten Welle.

Das System ist in der Figurenbeschreibung näher erläutert.

Die Lösung der oben gestellten Aufgabe gelingt überdies durch Anspruch 13, d.h. ein Verfahren zur Signalisierung einer Fehlausrichtung einer ersten Welle zu einer zweiten Welle mit einer Wellenkupplung, wobei auf das Element bei Fehlausrichtung der ersten Welle zur zweiten Welle ein Druck ausgeübt wird, wobei durch das Element Licht emittiert wird.

Die Erfindung ist von Vorteil, da günstige mechanolumineszente Materialien, die bei mechanischem Stress leuchten, verwendet werden. Die Wellenkupplung ist somit noch immer kostengünstig.

Durch eine Anordnung des mechanolumineszenten Materials in einem bei einer Fehlausrichtung mechanisch belasteten Bereich führt der mechanische Stress - dieser äußert sich vorteilhaft durch Druck - zur Lichtemission.

Die Lichtemission wird entweder durch ein menschliches Auge beobachtet oder kann mit einer Kamera eines Mobilgerätes, beispielsweise Smart Phone, aufgezeichnet werden.

Im Folgenden wird die Erfindung anhand der in den Figuren dargestellten Ausführungsbeispiele näher beschrieben und erläutert. Es zeigen:
- FIG 1 und FIG 2: eine Wellenkupplung,
- FIG 3 und FIG 4: verschiedene Ausgestaltungen eines Systems,
- FIG 5: ein Verfahren.

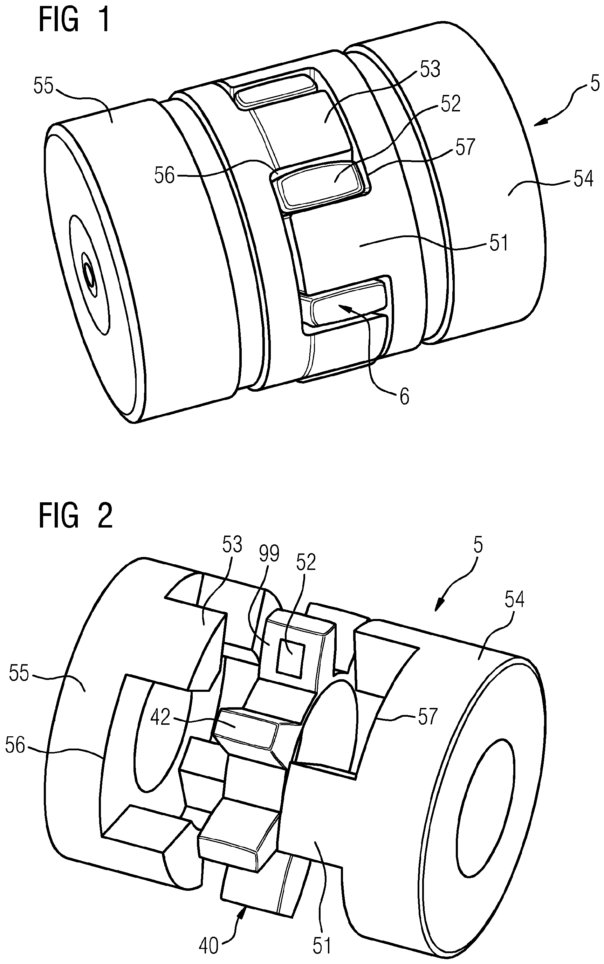

FIG 1 zeigt eine Wellenkupplung 5. Die Kupplung weist einen maschinenseitigen Teil 54 und einen lastseitigen Teil 55 auf.

FIG 2 zeigt die Wellenkupplung 5 in Explosivdarstellung.

Der maschinenseitige Teil (auch: Kupplungsnabe) 54 weist wenigstens eine Mitnahmeklaue 51, vorteilhaft zwei oder mehr beabstandet angeordnete Mitnahmeklauen 51, auf. Zwischen zwei Mitnahmeklauen ist eine Lücke 57.

Der lastseitige Teil (auch: Kupplungsnabe) 55 weist wenigstens eine Mitnahmeklaue 53, vorteilhaft zwei oder mehr beabstandet angeordnete Mitnahmeklauen 53, auf. Zwischen zwei Mitnahmeklauen ist eine Lücke 56.

Die Teile 54 und 55 sind in der Figur derart angeordnet, dass eine Mitnahmeklaue in die Lücke 56 greift.

Die Teile 54 und 55 sind in der Figur derart angeordnet, dass eine Mitnahmeklaue 53 in die Lücke 57 greift.

Die Mitnahmeklauen 51 bzw. 53 weisen in der Figur eine Kontur auf, die vorteilhaft nicht passgenau in die Lücke 56 bzw. 57 greift. Es befindet sich dazwischen ein Zwischenraum (auch: Spalt, Schlitz, Fuge).

FIG 2 zeigt hierzu einen Zahnkranz 40. Vorteilhaft weist der Zahnkranz ein Element 52 mit mechanolumineszentem Material auf.

Das Element 52 kann Teil des Zahnkranzes 40 sein, in den Zahnkranz 40 integriert sein oder an bzw. auf dem Zahnkranz 40 angeordnet sein.

Beispielsweise ist das Element 52 in einen Zahn 42 des Zahnkranzes 40 integriert. Das Element 52 kann auch der Zahn 42 sein. Element 52 kann auch auf dem Zahn 42 angeordnet sein.

Besonders vorteilhaft ist eine Anordnung des Elements 52 an und/oder auf und/oder wenigstens teilweise innerhalb einer Zahnflanke 99, da dort ein mechanischer Stress, der bei Fehlausrichtung zweier Wellen zueinander auftritt, am größten ist.

Eine Wellenkupplung 5 weist wenigstens ein Element 52 auf.

Vorteilhaft weist eine Wellenkupplung eine Mehrzahl an Elementen 52 auf.

Beispielsweise ist pro Zahn 42 des Zahnkranzes 40 ein Element 52 ausgebildet.

Es ist jedoch auch möglich, pro Zahn 42 des Zahnkranzes 40 zwei oder mehr Elemente 52 auszubilden. Eine Ausführungsform kann sein, dass an jeder Zahnflanke 99 ein Element 52 ausgebildet ist.

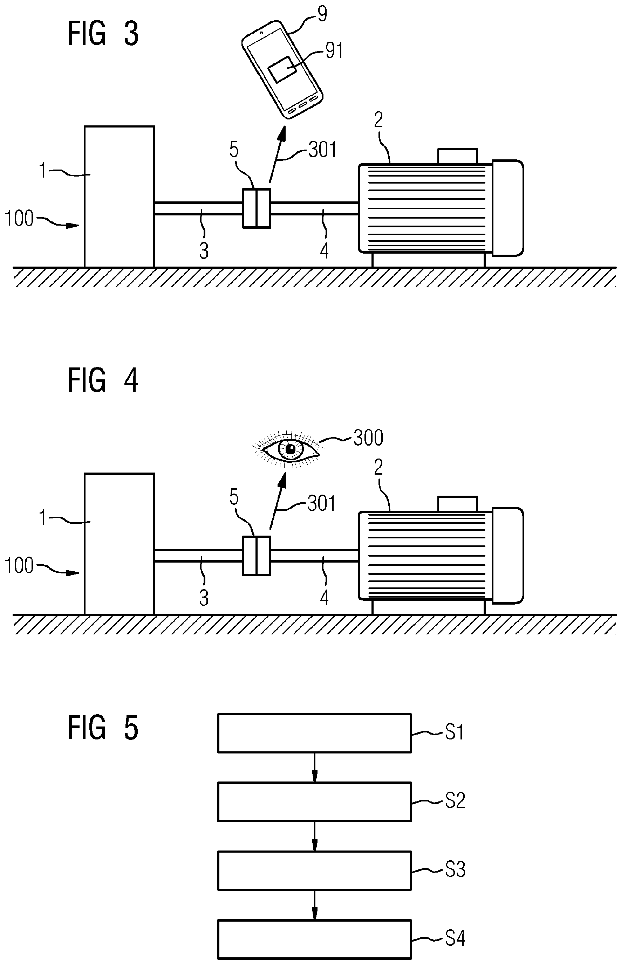

FIG 3 und FIG 4 zeigen verschiedene Ausgestaltungen eines Systems 100, aufweisend eine dynamoelektrische Maschine 2, eine Last 1, eine lastseitige Welle 3, eine maschinenseitige Welle 4 und eine Wellenkupplung 5.

Die Last 1 kann z. B. eine Pumpe oder ein Lüfter sein. Auch andere Arten sind möglich.

Die dynamoelektrische Maschine 2 ist vorteilhaft als dynamoelektrisch rotatorische Maschine ausgebildet.

Die Figuren zeigen, dass eine Signalisierung der Fehlausrichtung mittels Lichtemission 301 gelingt.

Eine Einheit 91 (siehe FIG 3), beispielsweise auf einem Smart Phone 9 realisiert, ist zum Empfang bzw. zur Erkennung der Lichtemission ausgebildet.
Auch ein Smart Sensor (nicht dargestellt), der beispielsweise an der Maschine 2 angeordnet ist, kann die Lichtemission erkennen.

Ein Smart Sensor ist ein Sensor, der vorteilhaft auf Mikrotechnik, Mikrosystemtechnik und/oder Nanotechnologie basiert und vorzugsweise zur Messgrößenerfassung und/oder Signalaufbereitung und/oder Signalverarbeitung eingerichtet ist.

Der Smart Sensor weist z. B. einen Mikroprozessor oder Mikrocontroller sowie vorteilhaft wenigstens eine, vorzugsweise standardisierte, Schnittstelle zur Kommunikation mit einem übergeordneten System auf. Der Smart Sensor ist kostengünstig, verbessert eine Flexibilität des Systems 100 und ermöglicht eine Dezentralisierung.

Wie in FIG 4 gezeigt, ist es jedoch auch möglich, dass ein menschliches Auge 300 die Lichtemission 301 erfasst.

Das Element 52 ist dergestalt, dass durch Druck, der bei Verspannung bzw. Fehlausrichtung der Wellen 3 und 4 auf das Element wirkt, Licht emittiert wird.

Das Element 52 ist hierzu vorzugsweise druckempfindlich.

Die Fehlausrichtung der Wellen 3 und 4 ruft eine mechanische Kraft hervor, welche sich auf das Element 52 auswirkt. Dies äußert sich vorteilhaft durch Druck auf das Element52. Durch diesen Druck wird eine Lichtemission bewirkt.

Die Erfindung ermöglicht, Ausrichtfehler bzw. Fehlausrichtungen sicher und ohne Mehraufwand zu erkennen.

Die Fehlausrichtung führt meist zu einem Schlingern der Kupplung, somit wird vorteilhaft immer wieder Druck ausgeübt und vorteilhaft immer wieder Licht emittiert.

Das Element 52 ist vorteilhaft, wie bereits weiter oben erläutert, in die Wellenkupplung integriert. Dies ist sehr platzsparend und kompakt.

Die Erfindung bietet viele Vorteile. Eine Fehlausrichtung ist direkt und ohne aufwändige Instrumentierung erkennbar.

Es ist keine externe Energieversorgung nötig.

Langfristige Lagerschädigung an Motor oder Last durch dynamische Belastung bei Fehlausrichtung sind vermeidbar.

FIG 5 zeigt ein Verfahren.

In einem Verfahrensschritt S1 sind die maschinenseitige Welle und die lastseitige Welle fehlausgerichtet.

Eine Fehlausrichtung kann beim Kuppeln der Wellen entstehen. Ferner kann eine Fehlausrichtung auch durch eine Fundamentsenkung entstehen.

Die Fehlausrichtung führt zu einer Verspannung der Wellen.

In einem Verfahrensschritt S2 wird Druck auf das Element aufgrund der Fehlausrichtung ausgeübt.

In einem Verfahrensschritt S3 emittiert das Element Licht.

In einem Verfahrensschritt S4 wird die Lichtemission erkannt - durch ein menschliches Auge und/oder durch eine andere Einheit.

## Patentansprüche

1. Wellenkupplung (5) zur Kupplung einer ersten Welle (3) und einer zweiten Welle (4), aufweisend:
- eine erste Kupplungsnabe (55) zur Verbindung mit der ersten Welle (3) mit wenigstens einer ersten Mitnahmeklaue (53),
- eine zweite Kupplungsnabe (54) zur Verbindung mit der zweiten Welle (4) mit wenigstens einer zweiten Mitnahmeklaue (51),
- einen Zahnkranz (40),
- ein Element (52) zur Signalisierung einer Fehlausrichtung der ersten Welle zur zweiten Welle, aufweisend ein mechanolumineszentes Material.

2. Wellenkupplung (5) nach Anspruch 1, wobei die Wellenkupplung (5) als Elastomerkupplung ausgebildet ist.

3. Wellenkupplung (5) nach einem der vorhergehenden Ansprüche, wobei das Element an einem bei Fehlausrichtung der ersten Welle zur zweiten Welle mechanisch belasteten Bereich angeordnet ist.

4. Wellenkupplung (5) nach einem der vorhergehenden Ansprüche, wobei das Element (52) an und/oder innerhalb und/oder auf dem Zahnkranz (40) der Wellenkupplung (5) ausgebildet ist.

5. Wellenkupplung (5) nach einem der vorhergehenden Ansprüche, wobei das Element an einer Zahnflanke (99) angeordnet ist.

6. Wellenkupplung (5) nach einem der vorhergehenden Ansprüche, wobei das Element (52) wenigstens teilweise an einer Oberfläche der Zahnflanke (99) ausgebildet ist.

7. Wellenkupplung (5) nach einem der vorhergehenden Ansprüche, wobei das Element (52) Kunststoff aufweist.

8. Wellenkupplung (5) nach einem der vorhergehenden Ansprüche, wobei das Element (52) Polytetrafluorethylen (PTFE) und/oder Polydimethylsiloxan (PDMS) aufweist.

9. Wellenkupplung (5) nach einem der vorhergehenden Ansprüche, wobei das Element (52) ZnS:Cu + PTFE aufweist.

10. Wellenkupplung (5) nach einem der vorhergehenden Ansprüche, wobei das Element (52) ZnS:Cu + PDMS aufweist.

11. Wellenkupplung (5) nach einem der vorhergehenden Ansprüche, wobei das Element (52) ZnS:Cu + PDMS + PTFE aufweist.

12. System (100), aufweisend:
- eine dynamoelektrische Maschine (2),
- eine Last (1),
- eine erste Welle (3),
- eine zweite Welle (4),
- eine Wellenkupplung (5) nach einem der Ansprüche 1 bis 11 zur Kupplung der ersten Welle (3) und der zweiten Welle (4).

13. Verfahren zur Signalisierung einer Fehlausrichtung einer ersten Welle (3) zu einer zweiten Welle (4) mit einer Wellenkupplung (5) nach einem der Ansprüche 1 bis 11, wobei auf das Element (52) bei Fehlausrichtung der ersten Welle (3) zur zweiten Welle (4) ein Druck ausgeübt wird, wobei durch das Element (52) Licht emittiert wird.
